# EUROPEAN PATENT APPLICATION

(11) **EP 0 982 699 A2**
(43) Date of publication of application: **01.03.2000**
(21) Application number: 99108758.6
(22) Date of filing: 03.05.1999
(51) Int. Cl.: G08G 1/0967

(54) **Road sign sensing system**

(30) Priority: 20.08.1998 JP 24907798
(71) Applicant: MATSUSHITA ELECTRIC INDUSTRIAL CO., LTD., Kadoma-shi, Osaka (JP)
(72) Inventor: Suda, Toshihiko, Yokohama-shi (JP); Kusakari, Takashi, Yokohama-shi (JP); Kitou, Yasunori, Yokohama-shi (JP); Masuda, Satoru, Yokohama-shi (JP); Sugimoto, Mituyoshi, Yokohama-shi (JP); Oguchi, Takashi, Kawasaki-shi (JP)
(74) Representative: Patentanwälte Leinweber & Zimmermann

(57) **Abstract**

In a road sign sensing system, a digital signal sign for intoning a vehicle driver of a road sign (4, 5, 9, 10, 41) indicative of the digital signal sign includes a plurality of bars (11 to 18, 19 to 26, 19' to 25') provided on a road surface as extended in a direction perpendicular to a vehicle running direction. Camera sensors (120, 122, 124, 126) for scanning and reading the digital signal sign are mounted on the vehicle so that scanning lines of the sensors are perpendicular to the plurality of bars.

## Description

### BACKGROUND OF THE INVENTION

### FIELD OF THE INVENTION:

The present invention relates to a road sign sensing system and more particularly, to a road sign sensing system which can detect a road sign digitally displayed on a road with use of a vehicle sensor.

### DESCRIPTION OF THE RELATED ART:

Conventional road signs are displayed on poles at road sides or on road surfaces in the form of character or symbol signs including, e.g., a "speed limit" sign, a "stop" sign, a "pedestrian crossing" sign and a "coming crossing notice" sign. A vehicle driver, after visually confirming such a road sign, slows down or stops his or her car. In this way, the sign reflects on his or her driving by such car control.

In a conventional road sign sensing system, road conditions varying with time are guided by means of a light sign board or the like. Further, it is suggested to audibly or visually inform drivers of traffic information or to control vehicles by means of an electromagnetic wave or optical signal.

However, such conventional road signs have a problem that, since the driver visually reads such a sign, the car control can be realized only by the driver and the road sign information cannot be directly used as vehicle drive control data. The conventional road sign sensing system has another problem that, since the system requires provision of means for directly informing the vehicle of road information by means of radio communication, it will involve high costs and a new system in the upgrading of road infrastructure, which impractically involves a lot of time and cost.

It is obvious that the degree of safety can be improved by the fact that a driver can reliably know the conditions of a road on which driver's car is running and its surrounding circumstances. Accordingly, in order to safely drive the car, it is necessary for the driver to reliably take information from road signs. It is however highly difficult for the driver to visually confirm all the road signs during his car drive for his constant safe and reliable drive. Further, in case that road signs are written only in Japanese, the signs disadvantageously becomes meaningless for non-Japanese drivers.

### SUMMARY OF THE INVENTION

It is therefore an object of the present invention to provide a road sign sensing method and system which can directly read road signs and visually or audibly inform a driver of information about the road signs to thereby realize his enhanced safe driving.

In accordance with the present invention, the above object is attained by providing on a road surface or side wall of express highway and non-expressway roads such a digital signal sign as to display to running cars information about the road speed limit, presence or absence of a pedestrian crossing or a curve, under-construction section, road circumstances, etc. With such an arrangement, it becomes possible for a running car to read digitally displayed data about road signs via a sensor mounted in the car and to inform the driver of the data on a video monitor or by means of a sounding device both mounted within the car. Even when the car is running at a high speed, it is unnecessary for the driver to visually read the road signs, whereby the driver can concentrate on his driving alone. Further, since the digital signal signs can be displayed with conventional white paint, it becomes unnecessary to add a further facility for the road display.
(1) The present invention relates to a road sign display system in which a digital signal sign for displaying information about road speed limit, presence or absence of a pedestrian crossing or curve, under-construction section or road conditions for running vehicles is provided on a road surface or side wall of an expressway or ordinary road, and the digital signal sign has a function of informing a vehicle driver of digital information of a road sign.
(2) In the road sign display system of the present invention as set forth in the above (1), the digital signal sign is a bar-shaped sign of a plurality of bars which indicates digital information based on different intervals between the bars and which has a function of informing the vehicle driver of digital information of a road sign based on the different bar intervals.
(3) In the road sign display system of the present invention as set forth in the above (1), the digital signal sign is a bar-shaped sign of a plurality of bars which indicates digital information based on different widths of the bars and which has a function of informing the vehicle driver of digital information of a road sign based on the different bar widths.
(4) In the road sign display system of the present invention as set forth in the above (1), the digital signal sign is a bar-shaped sign of a plurality of bars extended in a direction parallel to a running direction of the vehicle, the bar-shaped sign indicates digital information based on different intervals between the bars and has a function of enabling the reading of the sign when the vehicle is stopped.
(5) In the road sign display system of the present invention as set forth in the above (1), the digital signal sign is a bar-shaped sign of a plurality of bars extended in a direction parallel to a running direction of the vehicle, the bar-shaped sign indicates digital information based on different widths of the bars and has a function of enabling the reading of the sign when the vehicle is stopped.
(6) In the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different intervals between the bars and has a function of informing the vehicle driver of digital information of a road sign based on the bar intervals.
(7) In the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different lengths of the bars, the lane dividing lines on both sides of the vehicle indicate the same digital information and have a reliable information notification function due to its duplicated data.
(8) In the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different intervals between the bars, the lane dividing lines on both sides of the vehicle indicate different digital information and have a function of transmitting doubled information.
(9) In the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different lengths of the bars and has a function of informing the vehicle driver of the digital information of the road sign based on the bar lengths.
(10) In the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different lengths of the bars, the lane dividing lines on both sides of the vehicle indicate the same digital information and have a reliable information notification function due to its duplicated data.
(11) in the road sign display system of the present invention as set forth in the above (1), the digital signal sign is a bar-shaped sign of a plurality of bars obtained by dividing lane dividing lines indicative of a running range of the vehicle, the bar-shaped sign indicates digital information based on different lengths of the bars, the lane dividing lines on both sides of the vehicle indicate different digital information and have a function of transmitting doubled information.
(12) In the road sign display system of the present invention as set forth in the above (1), the digital signal sign is a bar-shaped sign of a plurality of bars provided in an oncoming-vehicle division structure strip or lane division structure strip on a road side, the bar-shaped sign indicates digital information based on different intervals between the bars and has a function of informing the vehicle driver of the digital information of the road sign based on the bar intervals.
(13) In the road sign display system of the present invention as set forth in the above (1), the digital signal sign is a bar-shaped sign of a plurality of bars provided in an oncoming-vehicle division structure strip or lane division structure strip on a road side, the bar-shaped sign indicates digital information based on different widths of the bars and has a function of informing the vehicle driver of the digital information of the road sign based on the bar widths.
(14) In the road sign display system of the present invention as set forth in the above (1), the digital signal sign is a bar-shaped sign of a plurality of bars provided in an oncoming-vehicle division structure strip or lane division structure strip on a road side as extended in a direction parallel to a running direction of the vehicle, the bar-shaped sign indicates the digital information of the road sign based on different intervals between the bars and has a function of informing the vehicle driver of the digital information of the road sign based on the bar intervals.
(15) in the road sign display system of the present invention as set forth in the above (1), the digital signal sign is a bar-shaped sign of a plurality of bars provided in an oncoming-vehicle division structure strip or lane division structure strip on a road side as extended in a direction parallel to a running direction of the vehicle, the bar-shaped sign indicates digital information based on different widths of the bars and has a function of informing the vehicle driver of the digital information of the road sign based on the bar widths.
(16) In the road sign display system of the present invention as set forth in any of the above (2) to (8), the bar-shaped sign has a length smaller than an interval between tires of the vehicle, is displayed in the middle of a vehicle running lane, and has a function of enabling recognition of a vehicle running position.
(17) In the road sign display system of the present invention as set forth in the above (2) or (3), the bar-shaped sign has such a thickness as to cause road noise and to transmit vibration to the vehicle to vibrate a driver of the vehicle and to sense the vibration bodily when tires of the vehicle tread on the sign, and has a function of calling attention to the driver by the rough road surface.
(18) In the road sign display system of the present invention as set forth in any of the above (2), (3) and (6) to (13), the bar-shaped sign has such a size that a running vehicle running at a normal speed can read the bar-shaped sign without error and has a function of increasing a sign reading reliability.
(19) in the road sign display system of the present invention as set forth in any of the above (2) to (11), means for always feeding normal temperature water or the like onto the bar-shaped sign at the time of snowfall is provided and has a function of preventing the sign from being covered with snow.
(20) In the road sign display system of the present invention as set forth in any of the above (2) to (11), heater means for liquefying snow is provided under the bar-shaped sign and has a function of preventing the sign from being covered with snow.
(21) In the road sign display system of the present invention as set forth in any of the above (2) to (15), a display paint of the bar-shaped sign contains fluorescent material and has a function of enabling reading of the sign even in night time.
(22) in order to display a road sign or the like for running vehicles, the present invention relates to a road sign sensing apparatus in which a camera sensor is provided to a vehicle to scan a digital signal sign of bars provided on a road surface as extended in a direction perpendicular to a vehicle running direction, scanning lines of the camera are perpendicular to the bars, and the camera sensor has a function of reliably scanning the sign.
(23) In order to display a road sign or the like for running vehicles, the present invention relates to a road sign sensing apparatus in which a camera sensor is provided to a vehicle to scan a digital signal sign of bars provided on a road surface as extended in a direction parallel to a vehicle running direction, scanning lines of the camera are perpendicular to the bars, and the camera sensor has a function of reliably scanning the sign.
(24) In order to display a road sign or the like for running vehicles, the present invention relates to a road sign sensing apparatus in which a camera sensor is provided to a vehicle to scan a digital signal sign of bars obtained by dividing lane dividing lines indicative of a vehicle running range, the sign indicates digital information, scanning lines of the camera are parallel to the bars, and the camera sensor has a function of reliably scanning the sign.
(25) In order to display a road sign or the like for running vehicles, the present invention relates to a road sign sensing apparatus in which a camera sensor is provided to a vehicle to vertically scan a digital signal sign of bars obtained by dividing lane dividing lines indicative of a vehicle running range, the sign indicates digital information, scanning lines of the camera are parallel to the bars, and the camera sensor has a function of reliably scanning the sign.
(26) In order to display a road sign or the like for running vehicles, the present invention relates to a road sign sensing apparatus in which a camera sensor is provided to a vehicle to vertically scan a digital signal sign of bars obtained by dividing lane dividing lines indicative of a vehicle running range, the sign indicates digital information, scanning lines of the camera are perpendicular to a vehicle running direction, and the camera sensor has a function of reliably scanning the sign.
(27) The present invention relates to a road sign display system in which start and end bits are provided to a digital signal sign for display of a road sign or the like to running vehicles, and has a function of reliably discriminating between data start and end.
(28) The present invention relates to a road sign sensing apparatus which comprises means for reading a digital signal sign for display of a road sign or the like to a running vehicle, and a video display device provided in the vehicle for displaying contents of the digital signal sign in the form of character information, and has a function of informing the vehicle driver of meaning of the digital signal sign in the form of characters.
(29) The present invention relates to a road sign sensing apparatus which comprises means for reading a digital signal sign for display of a road sign or the like to a running vehicle, and a loudspeaker provided in the vehicle for informing the driver of contents of the digital signal sign in the form of a voice or signal sound, and has a function of informing the vehicle driver of meaning of the digital signal sign in the form of a voice.
(30) The present invention relates to a road sign sensing apparatus which comprises means for reading a digital signal sign for display of a road sign or the like to a running vehicle, and means for detecting the fact that a level in the read signal exceeded a threshold value and outputting an alarm, and has a function of detecting zigzag running of the vehicle and outputting an alarm on the basis of the digital signal sign.
(31) The present invention relates to a road sign sensing apparatus which comprises means for reading a digital signal sign for display of a road sign or the like to a running vehicle, means for detecting that a read level dropped by a constant level or more from an initial level, and means for outputting an alarm to a driver of the vehicle to clean camera sensor surfaces on a monitor or audibly at the time of the level drop, and has a function of detecting a dirt on the light receiving surfaces of the camera sensors and informing the driver of the dirt surface.
(32) The present invention relates to a road sign display apparatus in which a device for illuminating a digital signal sign for display of a road sign or the like to a running vehicle is buried in a road, and has a function of enabling recognition of the digital signal sign in night time.
(33) The present invention relates to a road sign sensing apparatus which comprises means for storing various types of data indicative of a digital signal sign for display of a road sign or the like to a running vehicle for a predetermined time, and means for finding a route, along which the vehicle ran, from the data stored in the storage means, and has a function of enabling analysis of vehicle run history.

### BRIEF DESCRIPTION OF THE DRAWINGS

Figs. 1A to 1C show road sign display systems in accordance with a first embodiment of the present invention;
Figs. 2A and 2B show road sign display systems in accordance with a second embodiment of the present invention;
Fig. 3 shows a road sign display system in accordance with a third embodiment of the present invention;
Fig. 4 shows another road sign display system in accordance with the third embodiment of the present invention;
Fig. 5 shows a road sign display system in accordance with a fourth embodiment of the present invention;
Fig. 6 shows a functional block diagram of a road sign sensing system in accordance with a fifth embodiment of the present invention;
Figs. 7A to 7C are diagrams for explaining the scanning operation of the road sign sensing system of the fifth embodiment of the invention;
Figs. 8A and 8B are diagrams for explaining how to detect a roll in the road sign sensing system of the fifth embodiment of the invention; and
Figs. 9A and 9B are diagrams for explaining how to detect a dirt in the road sign sensing system of the fifth embodiment of the invention.

### DETAILED DESCRIPTION OF THE EMBODIMENTS

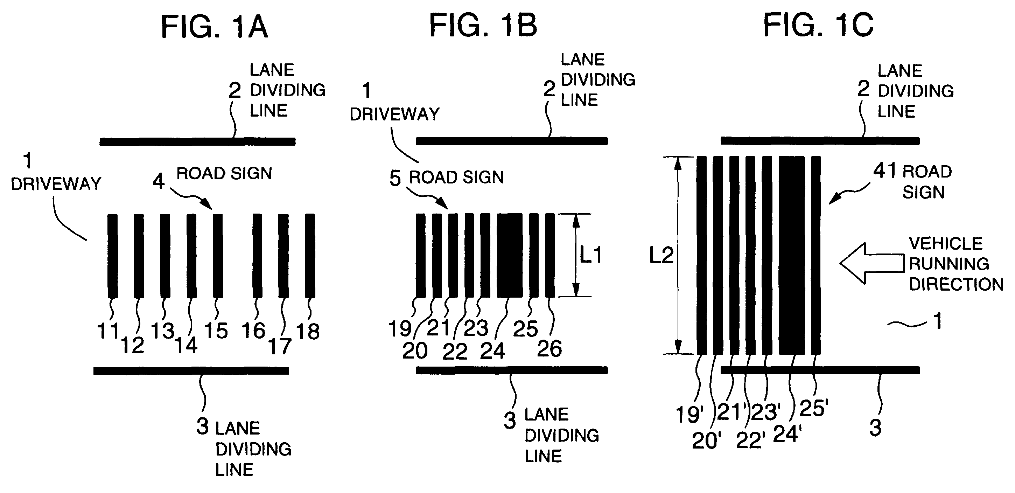

The present invention will be detailed in connection with embodiments of the invention with reference to Figs. 1 to 9.

### (First Embodiment)

In a road sign display system in accordance with a first embodiment of the present invention, a sign of bars in a direction perpendicular to running directions of vehicles is drawn on a surface of a road to provide a digital indication for the road sign.

Figs. 1A to 1C show road sign display systems in accordance with the first embodiment of the present invention. In Figs. 1A to 1C, a driveway 1 is a paved road such as a highway road or a non-expressway or ordinary road. Lane dividing lines 2 and 3 are white or yellow lines for defining a lane on the driveway 1. A road sign 4 shown in Fig. 1A is a digital road sign which includes a plurality of bars drawn in a middle area of the lane and a difference in interval between the bars denotes "0" or "1". A road sign 5 shown in Fig. 1B is a digital road sign which includes a plurality of bars drawn in a middle area of the lane and a difference in width of the bar denotes "0" or "1". A road sign 41 shown in Fig. 1C is a digital road sign which includes a plurality of bars drawn in a middle area of the lane and a difference in width of the bar denotes "0" or "1".

Explanation will be made in detail as to the road sign display systems in accordance with the first embodiment of the present invention, by referring to Figs. 1A to 1C.

In the road sign display system shown in Fig. 1A, eight bars 11 to 18 each having an equal width are drawn in the middle of the driveway 1 as extended in direction perpendicular to the car moving direction like supports on 'geta' (wooden sandals). Digital data indicated by the bars 11 to 18 are recognized by photographing the bars 11 to 18 with use of a cameras sensor mounted onto the car during running of the car.

More specifically, when an interval between the adjacent bars, e.g., between the bars 11 and 12 is small, it is recognized as digital data of "0". When an interval between the adjacent bars, e.g., between the bars 15 and 16 is large, it is recognized as digital data of "1". Accordingly, the illustrated 8 bars 11 to 18 are recognized as digital data of "0, 0, 0, 0, 1, 0, 0".

In this way, in the road sign display system, when 5 bars are drawn, the bars can indicate 4-bit digital data and therefore 16 road signs can be transmitted to the car driver. Further, when 7 bars are drawn, the bars can indicate 6-bit digital data and therefore 64 road signs can be transmitted to the car driver.

In the road sign display system shown in Fig. 1B, eight bars 19 to 26 having different widths are drawn in the middle of the driveway lane 1 as extended in a direction perpendicular to the car moving direction like supports on 'geta' (wooden sandals). Digital data indicated by the bars 19 to 26 are recognized by photographing the bars 19 to 26 with use of a camera sensor mounted onto the car during running of the car.

More specifically, when the bar width is small like the bars 19 to 23, 25 and 26, it is recognized as digital data of "0". When the bar width is large like the bar 24, it is recognized as digital data of "1". Accordingly, the illustrated 8 bars 19 to 26 are recognized as digital data of "0, 0, 0, 0, 0, 1, 0, 0".

In this way, in this road sign display system, when 4 bars are drawn, the bars can indicate 4-bit digital data and therefore 16 road signs can be transmitted to the car driver. Further, when 6 bars are drawn, the bars can indicate 6-bit digital data and therefore 64 road signs can be transmitted to the car driver.

In the road sign display system shown in Fig. 1C, eight bars 19' to 25' having different widths are drawn as substantially fully extended up to the side extremes of the driveway lane 1 in direction perpendicular to the car moving direction like supports on 'geta' (wooden sandals). In other words, in this road sign display system, length L2 of the bars 19' to 25' is made longer than length L1 of the bars 19 to 26 of Fig. 1B.

In the road sign display system of Fig. 1B, length L1 of the bars 19 to 26 is set so that the tires of the car will not come into contact with the bars 19 to 26 so long as the car is normally running within the lane. When the car is unstably running to right or left side, on the other hand, the car tires come into contact with the bars 19 to 26 and thus its running sound becomes changed. Thus, the car driver can know the fact that the car is not running in the middle of the lane based on the car running sound, which also can help driver's safety driving. Meanwhile, in the road sign display system of Fig. 1C, the bars 19' to 25' drawn as substantially fully extended up to the extremes of the width of the lane can play a role of a brake indication which informs the driver of necessity of brake application for a coming long downhill slope, or a role of a drowsiness preventing indication which informs the driver of keeping him awake as on such a long straight road as induce drowsiness.

In this connection, even when the bars 11 to 18 of Fig. 1A are drawn as fully extended up to the extremes of the width of the driveway lane 1, the road sign display system of Fig. 1A can have substantially the same effects as the road sign display system of Fig. 1C.

Since road signs are important, it is necessary to always inform the driver of data on these signs. To this end, when the bars 11 to 26 and 19' to 25' may not be read out by the camera sensor mounted on the car due to snowfall, means for always causing flowing of water onto the bars 11 to 26 and 19' to 25' may be provided in order to avoid the bars from being covered with snow. Further, in order to avoid snow from heap on the bars, heaters may be provided under the bars 11 to 26 and 19' to 25'. Furthermore, in order that the camera sensor can sufficiently read the barsll to 26 and 19' to 25' at night, the material of the bars 11 to 26 and 19' to 25' may contain fluorescent substance. In addition, for the purpose of giving the driver a clearer view of the bars 11 to 26 and 19' to 25', illuminating means may be provided within the bars 11 to 26 and 19' to 25'. In this case, when the road is covered with a glass material to allow light of the illuminators within the bars 11 to 26 and 19' to 25' to be transmitted through the glass, the driver can clearly read the bars 11 to 26 and 19' to 25'.

As has been explained above, in the road sign display systems in accordance with the first embodiment of the present invention, when bar-shaped signs are drawn on the lane as extended in the direction perpendicular to the car running direction, the car driver can reliably get information on the bar-shaped signs during car drive.

### (Second Embodiment)

In a road sign display system in accordance with a second embodiment of the present invention, a sign of bars extended in a direction parallel to the car moving direction is drawn on a road for its digital display.

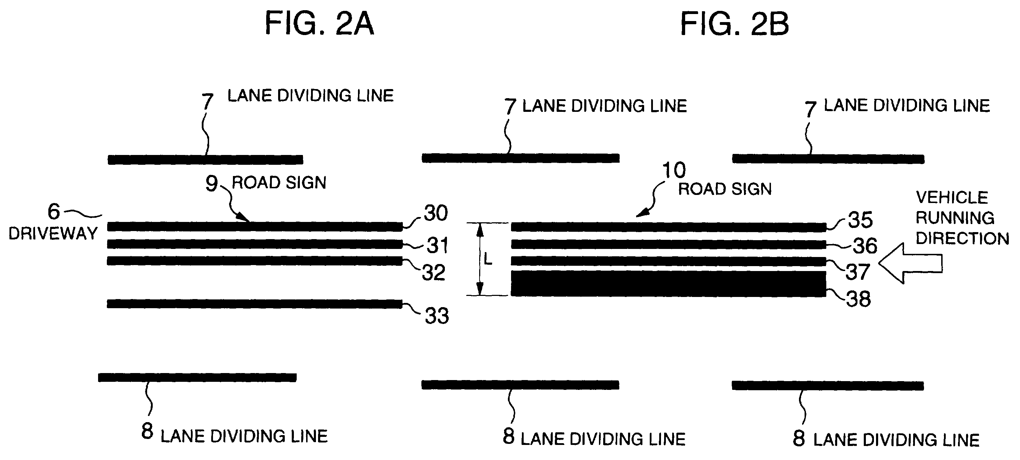

Figs. 2A and 2B show road sign display systems in accordance with the second embodiment of the present invention. In Figs. 2A and 2B, a driveway 6 is a paved road such as a highway road or a non-expressway or ordinary road. Lane dividing lines 7 and 8 are white or yellow lines for defining a lane on the driveway 6. A road sign 9 shown in Fig. 2A is a digital road sign which includes a plurality of bars drawn in a middle area of the lane and a difference in interval between the bars denotes "0" or "1". A road sign 10 shown in Fig. 2B is a digital road sign which includes a plurality of bars drawn in a middle area of the lane and a difference in width of the bar denotes "0" or "1".

Explanation will be made in detail as to the road sign display systems in accordance with the second embodiment of the present invention, by referring to Figs. 2A and 2B.

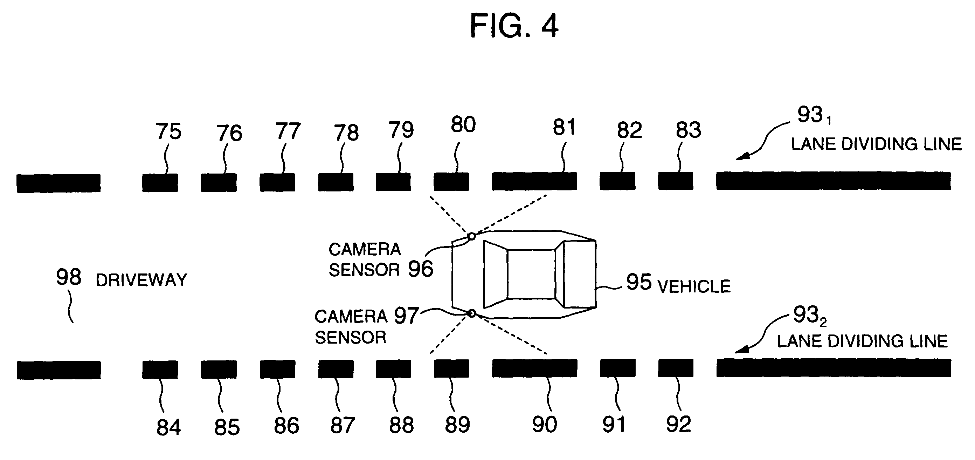

In the road sign display system shown in Fig. 2A, 4 bars 30 to 33 each having an equal width are drawn on the lane in a direction parallel to the car moving direction. When the bars 30 to 33 are drawn in the direction parallel to the car moving direction, a detector (such as a camera sensor) mounted on the car can detect digital data indicated by the bars 30 to 33 for a long time, the driver can confirm the digital data detected during the car running.

More specifically, when an interval between the adjacent bars, e.g., between the bars 30 and 31 is small, it is recognized as digital data of "0". When an interval between the adjacent bars, e.g., between the bars 32 and 33 is large, it is recognized as digital data of "1". Accordingly, the illustrated 4 bars 30 to 33 are recognized as digital data of "0, 0, 1".

In the road sign display system shown in Fig. 2B, 4 bars 35 to 38 having different widths are drawn as extended in a direction parallel to the car moving direction. When the bar width is small like the bars 35 to 37, it is recognized as digital data of "0". When the bar width is large like the bar 38, it is recognized as digital data of "1". Accordingly, the illustrated 4 bars 35 to 38 are recognized as digital data of "0, 0, 0, 1".

The 4 bars 30 to 33 shown in Fig. 2A as well as the 4 bars 35 to 38 shown in Fig. 2B are drawn on the lane to have such length L that the tires of the car will not come into contact with the bars 30 to 33 and 35 to 38 so long as the car is normally running. When the car is unstably running to right or left side, on the other hand, the car tires come into contact with the bars 30 to 33 and 35 to 38, and thus its running sound becomes changed. Thus, the car driver can know the fact that the car is not running in the middle of the lane based on the car running sound, which also can help driver's safety driving.

As has been explained above, in the road sign display systems in accordance with the second embodiment of the present invention, when bar-shaped signs are drawn on the lane as extended in the direction parallel to the car running direction, the car driver can reliably get information on the bar-shaped sign during car drive, because the detector on the car can detect the bar-shaped sign for a long time.

### (Third Embodiment)

In a road sign display system in accordance with a third embodiment of the present invention, lane dividing lines are used for digital display of a road sign.

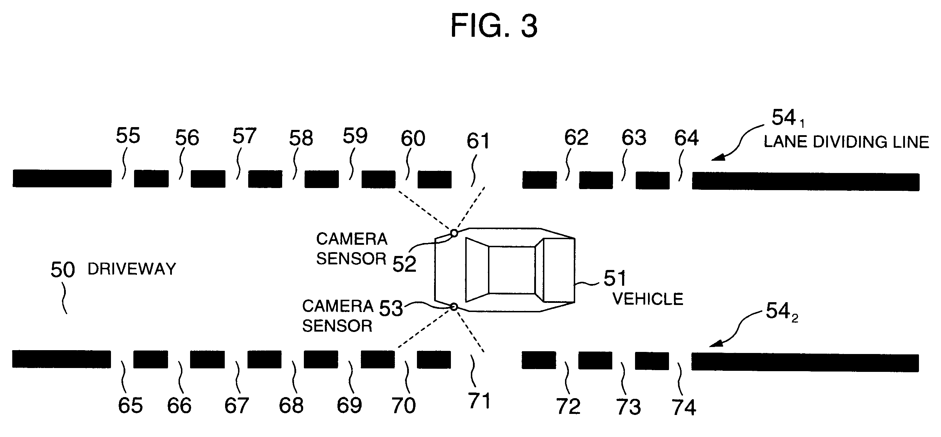

Figs. 3 and 4 show road sign display systems in accordance with the third embodiment of the present invention. In Fig. 3, a driveway 50 is a paved road such as a highway road or a non-expressway or ordinary road. Lane dividing lines 54₁ and 54₂ are white or yellow lines for defining a lane on the driveway 50. A car 51 is a car running on the lane of the driveway 50. Camera sensors 52 and 53 are mounted on front left and right sides of the car 51, respectively. In Fig. 4, a driveway 98 is a paved road such as a highway road or a non-expressway or ordinary road. Lane dividing lines 931 and 932 are white or yellow lines for defining a lane on the driveway 98. A car 95 is a car running on the lane of the driveway 98. Camera sensors 96 and 97 are mounted on front left and right sides of the car 51, respectively.

Explanation will be made in detail as to the road sign display system of the third embodiment of the present invention, by referring to Figs. 3 and 4.

In the road sign display system of Fig. 3, the lane dividing lines 54₁ and 54₂ are made discontinuous into bars having intervals 55 to 64 and 65 to 74 therebetween to display a road sign (digital data) based on the bar intervals. Digital data about the sign is read out into the car by the camera sensors 52 and 53 provided on the left and right sides of the car 51 which function to read out the intervals 55 to 64 and 65 to 74. When the interval between the adjacent bars of the discontinuous lane dividing line 54₁ is small as the interval 55 between the adjacent bars, it is recognized as digital data of "0". When the interval between the adjacent bars of the lane dividing line 54_{1,} on the other hand, is large as the interval 61 between the adjacent bars, it is recognized as digital data of "1". Accordingly, in the illustrated example, digital data indicated by the intervals 55 to 64 of the adjacent bars of the lane dividing line 54₁ and by the intervals 65 to 74 of the adjacent bars of the lane dividing line 54₂ is recognized as digital data of "0, 0, 0, 0, 0, 0, 1, 0, 0, 0".

In this way, in this road sign display system, since road sign information can be indicated along the car running lane, road sign information of multiple bits such as 8 bits or 16 bits also can be indicated. Further, when an identical road sign (digital data) is displayed as repeated, its road sign reading reliability can be increased.

Further, when the same road sign is displayed with use of the lane dividing lines 54₁ and 54₂ at the both sides of the driveway 50, the road sign reading reliability can be increased. Furthermore, when navigation information (e.g., on lane destination) is set in one of the lane dividing lines 54₁ and 54₂, the car 51 also can run on a navigation basis.

In the road sign display system of Fig. 4, lane dividing lines 93₁ and 93₂ are made discontinuous into bars 75 to 83 and 84 to 92 to display a road sign (digital data) based on lengths of the bars. Digital data about the bars are read out into the car 95 by the sensors 96 and 97 mounted on the left and right sides of the car 95 for reading the lengths of the bars 75 to 83 and 84 to 92. When the length of one of the divided bars of the lane dividing line 93₁ is small like that of the bar 75, it is recognized as digital data of "0". When the length of one of the divided bars of the lane dividing line 93₁ is large like that of the bar 81, it is recognized as digital data of "1". Accordingly, in the illustrated example, digital data indicated by the bars 75 to 83 of the lane dividing line 93₁ and by the bars 84 to 92 of the lane dividing line 93₂ are recognized as digital data of "0, 0, 0, 0, 0, 0, 1, 0, 0".

In this way, this road sign display system can have substantially the same effects as the road sign display system of Fig. 3, since the system can display road sign information along the car running lane. Even in this road sign display system, like the road sign display system of Fig. 3, the lane dividing lines 93₁ and 93₂ may be used to display an identical road sign (digital data) or to display different road signs. Further, when the lane dividing lines 93₁ and 93₂ are used to display different road sign (digital data), information about the position of the car 95 and information about a next coming road at a fork road of an expressway can be informed to the driver.

As has been explained in the foregoing, since the road sign display system in accordance with the third embodiment of the present invention is arranged to display the bar-shaped sign with use of the lane dividing lines, the system can display not only the road sign but also information on navigation, car position and expressway fork road.

### (Fourth Embodiment)

In a road sign display system in accordance with a fourth embodiment of the present invention, a bar-shaped sign is drawn on a side wall of a road to digitally display the sign.

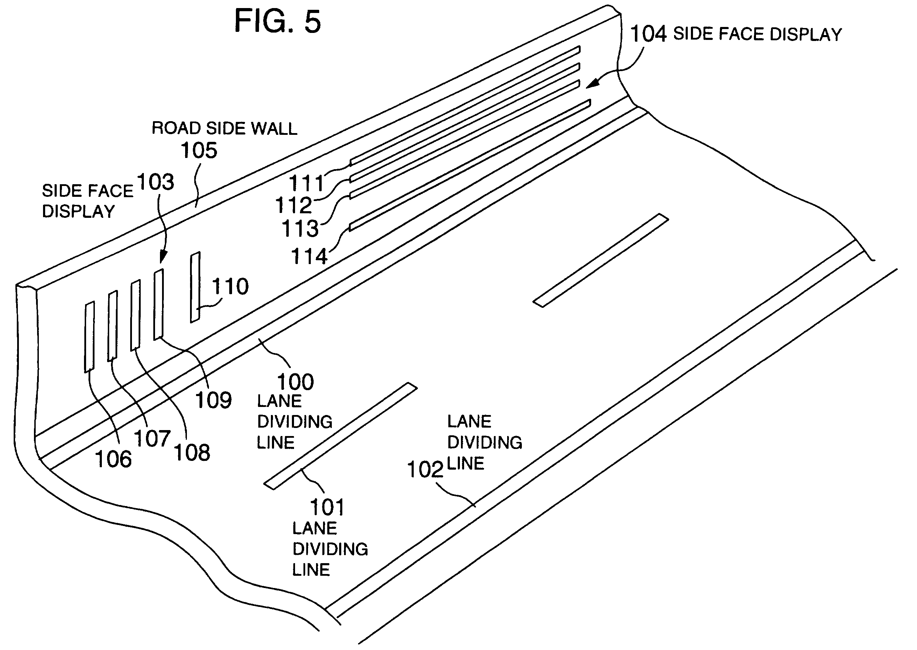

Fig. 5 shows a road sign display system in accordance with the fourth embodiment of the present invention. In Fig. 5, lane dividing lines 100, 101 and 102 are lines for defining the lane. Side face displays 103 and 104 are signs of bars each including a plurality of bars drawn on a median strip or side wall of a road. A road side wall 105 is a median strip or a side wall of the road. When a median strip for lane division or the road side wall 105 is used to display a road sign (digital data), the road sign can be always read out even in a region where it often hard to see road faces at the time of snowfall or rainfall.

The side face display 103 drawn on the road side wall 105, like the road sign 4 shown in Fig. 1A, is a sign of bars which shows a road sign (digital data) indicative of a vehicle division or the like based on intervals of bars 106 to 110 and which is drawn as extended in a direction perpendicular to the car moving direction. In this connection, the side face display 103, like the road sign 5 shown in Fig. 1B, may be a sign of bars which shows a road sign (digital data) indicative of a vehicle division or the like based on widths of the bars 106 to 110 and which is drawn as extended in a direction perpendicular to the car moving direction. The side face display 104 drawn on the road side wall 105, like the road sign 9 shown in Fig. 2A, is a sign of bars which shows a road sign (digital data) indicative of a vehicle division or the like based on intervals of bars 111 to 114 and which is drawn as extended in a direction parallel to the car moving direction. In this connection, the road side wall 105, like the road sign 10 of Fig. 2B, may be a sign of bars which shows a road sign (digital data) indicative of a vehicle division or the like based on widths of 111 to 114 and which is drawn as extended in a direction parallel to the car moving lane.

As has been explained above, in the road sign display system of the fourth embodiment of the invention, the road sign is digitally displayed in the form of the bar-shaped sign drawn on the road side wall, so that, even when it is hard for a car driver to clearly see the road face at the time of snowfall or rainfall, the system can always inform the driver of the road sign.

### (Fifth Embodiment)

A road sign sensing system in accordance with a fifth embodiment of the present invention reads a bar-shaped sign with use of a camera sensor, converts the read data to digital data, and informs a car driver of information about the road sign.

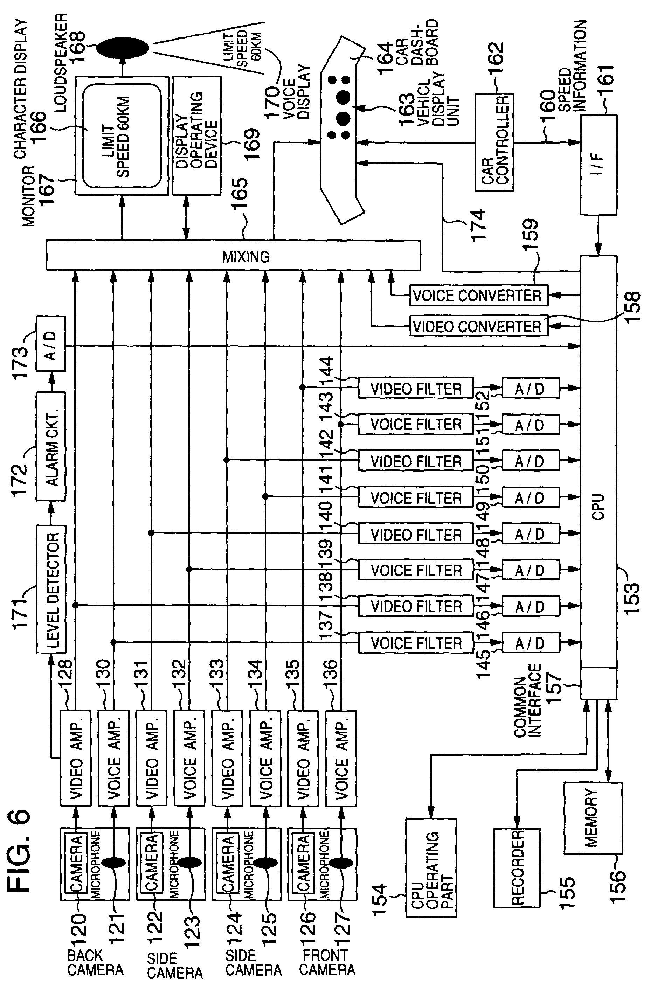

Fig. 6 shows a road sign sensing system in accordance with the fifth embodiment of the present invention. In Fig. 6, a back camera 120, side cameras 122, 124 and a front camera 126 function as sensors for reading a bar-shaped sign. Four microphones 121, 123, 125 and 127 receive external sound. Video amplification circuits 128, 131, 133 and 135 connected to the respective cameras 120, 122, 124 and 126 amplify video signals received from the cameras 120, 122, 124 and 126. Voice amplification circuits 130, 132, 134 and 136 connected to the respective microphones 121, 123, 125 and 127 amplify voice signals received from the microphones 121, 123, 125 and 127. Video filters 138, 140, 142 and 144 connected to the respective video amplification circuits 128, 131, 133 and 135 remove unnecessary components in the amplified video signals. Voice filters 137, 139, 141 and 143 connected to the respective voice amplification circuits 130, 132, 134 and 136 remove unnecessary components in the amplified voice signals. Analog/digital conversion (A/D) circuits 145 to 152 connected to the video amplification circuits 128, 131, 133 and 135 and voice amplification circuits 130, 132, 134 and 136 respectively convert the analog video signals and analog voice signals to digital video signals and digital voice signals.

A CPU 153 processes the digital video signals and digital voice signals output from the A/D circuit 145 to 152 to control recording and display of the video and voice signals. A CPU operating part 154 connected to the CPU 153 is input means such as a keyboard for operator's instruction to the CPU 153 or processing selection. A recording device 155 connected to the CPU 153 is a device which records the video and voice signals. A memory 156 connected to the CPU 153 is a temporary memory for use in processing of the CPU 153. The CPU operating part 154, recording device 155 and memory 156 receives and sends signal from and to the CPU 153 via a common interface 157.

A video conversion circuit 158 connected to the CPU 153 converts such data as character data for display to a video signal. A voice conversion circuit 159 connected to the CPU 153 converts digital data to a voice signal. A speed information signal 160 is a speed signal received from a car speedometer. An interface (I/F) 161 is an interface through which the speed information signal 160 is input from a vehicle controller 162 to the CPU 153.

The vehicle controller 162 controls the respective parts of the vehicle or collects output signals from the sensors. A vehicle display unit 163 displays a vehicle speed, traveled distance, position, etc. thereon. A vehicle dashboard 164 accommodates the speedometer, etc. therein. A mixing circuit 165 performs mixing operation of video, voice and data. A character display 166 is a message displayed on a monitor 167. The monitor 167 is a display unit such as a cathode-ray tube (CRT) which displays video data received from the CPU 153 thereon. A loudspeaker 168 outputs voice information from the CPU 153. A display operating device 169 is an input device by which the operator issues an instruction to the mixing circuit 165 to instruct the circuit of a display type, method, etc. A voice indication 170 is a voice message output from the loudspeaker 168.

A level detection circuit 171 compares a level of the video signal received from the camera with a predetermined threshold value. An alarm circuit 172 connected to the level detection circuit 171 outputs an alarm signal when the level of the video signal exceeds the predetermined threshold value. An analog/digital conversion (A/D) circuit 173 connected to the alarm circuit 172 converts an analog alarm signal to a digital alarm signal and outputs the digital alarm signal to the CPU 153. Display data 174 output from the CPU 153 includes data about a position which is to be displayed on the vehicle display unit 163.

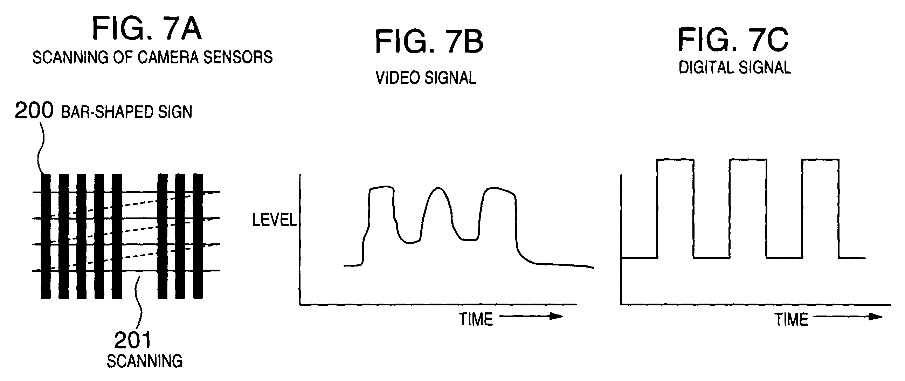

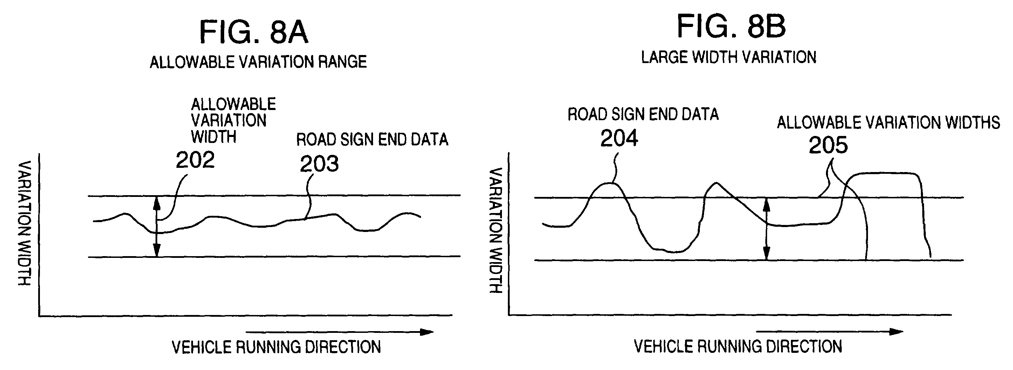

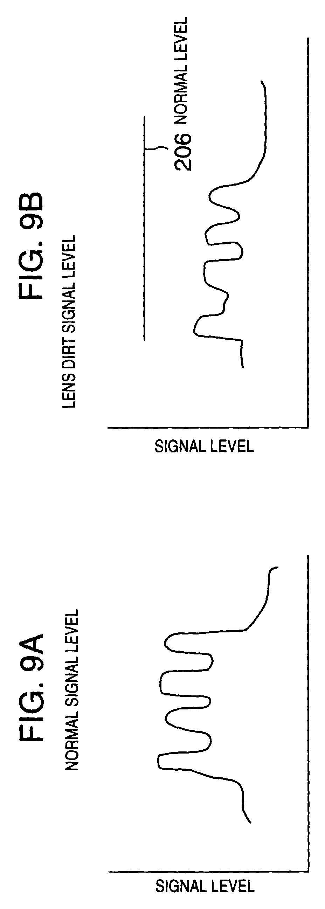

Figs. 7A to 7C are diagrams for explaining how to convert a bar-shaped sign to a digital signal in the road sign sensing system in accordance with the fifth embodiment of the present invention. In Fig. 7A, a bar-shaped sign 200 is an exemplary road sign drawn on a road face. Scanning 201 is for explaining how to scan the sign with use of the cameras 120, 122, 124 and 126. Figs. 8A and 8B are diagrams for explaining how to detect a roll in the road sign sensing system of the fifth embodiment of the present invention. In Figs. 8A and 8B, allowable variation widths 202 and 205 denote normal variation ranges in which variations in video signals of ends of a road sign (bar-shaped sign) are regarded as normal. Road sign end data 203 and 204 each denotes a video signal indicative of an end of a road sign (bar-shaped sign) shot by a camera. Figs. 9A and 9B are diagrams for explaining how to detect a dirt on the cameras in the road sign sensing system of the fifth embodiment of the present invention. A normal level 206 in Fig. 9B denotes the level of the video signals of the cameras 120, 122, 124 and 126 when the cameras have no dirt thereon.

The operation of the road sign sensing system of the fifth embodiment of the present invention will be explained by referring to Figs. 6 to 9.

The front camera 126 mounted on a front part of the vehicle is used to capture an image of the bar-shaped sign (road sign) 200 drawn on a road face. In order to accurately convert the image of the bar-shaped sign 200 to digital data, the front camera 126 is mounted on the vehicle so that the scanning line of the front camera 126 is vertical to each bar-shaped sign 200. That is, as shown by the scanning 201 in Fig. 7A, when white and black signals are arranged to be alternately output for data on one of lines in the image, it becomes easy to reproduce the image data as digital data. Therefore, the front camera 126 is mounted on the vehicle so that the camera performs such scanning 201 as shown in Fig. 7A over the bar-shaped sign 200 to efficiently read the bar-shaped sign 200.

The interval and width of bars in the bar-shaped sign 200 read by the front camera 126 will vary with a vehicle speed at which the vehicle transverses the bars of the bar-shaped sign 200. To avoid this, the CPU 153 acquires vehicle information such as the speed information signal 160 from the vehicle controller 162 ,and corrects the interval and width of the bars in the bar-shaped sign 200 read by the front camera 126. After such a correction, when the bar-shaped sign 200 is recognized as digital data, information indicative of the bar-shaped sign 200 can be correctly captured as the digital data. In this case, however, the bar-shaped sign 200 is drawn as extended in a direction perpendicular to the car moving direction. For this reason, when the car is stopped due to a traffic jam, the information indicative of the bar-shaped sign 200 cannot be read by the car.

However, in the case of such a bar-shaped sign indicated by bars parallel to the car moving direction as the bar-shaped signs 9 and 10 of Figs. 2A and 2B, regardless of the fact that the car is running at a high speed or is stopped, the digital data obtained by the front camera 126 are the same in the both situations. Accordingly, in this case, since the same digital data can be displayed for a long time, a sign reading error as a digital signal can be minimized.

The video signal thus obtained is as shown in Fig. 7B. The video signal is amplified by the video amplification circuit 135, removed in its unnecessary components by the video filter 144, and then converted by the A/D converter 152 to such a digital video signal as shown in Fig. 7C. On the basis of the converted digital video signal, an image of the bar-shaped sign 200 is processed and converted to digital data.

In the case of such displays as the road sign 4 of Fig. 1A, the road sign 5 of Fig. 1B, the lane dividing lines 54₁ and 54₂ of Fig. 3, the lane dividing lines 93₁ and 93₂ of Fig. 4 and the side face display 103 of Fig. 5; since the vehicle transverses these sign displays in a short time, start and end bits are inserted at the beginning and end of the reading data. When the recognition of the digital data is started with the reading of data about the start bit by vehicle sensor (such as the front camera 126 or side cameras 122 and 124), the digital data can be accurately recognized. How to indicate the start and end bits is selected according to the system application purpose.

The digital data obtained based on the digital video signal from the A/D converter 152 is collated in the CPU 153 with data previously registered in the memory 156 and converted to road sign information indicative of the bar-shaped sign 200.

For example, digital data are made associated with road sign information as given in Table below.

**TABLE**

| Relationship Between Digital Data And Road Sign Information | |
|---|---|
| Digital Data | Road Sign Information |
| 000001 | 50km Speed Limit |
| 000010 | Sharp Curve Ahead |
| 000100 | Pedestrian Crossing Ahead |
| 001000 | 100km Speed Limit |
| 010000 | Reduce Speed |
| 100000 | Fork Road Ahead |

The road sign information is converted to characters or an image by the video conversion circuit 158. In this way, since information on the speed, pedestrian crossing, road, destination, distance, etc. are displayed on the monitor 167 within the car, these information can help safety driving. Similarly, the road sign information is converted to a voice signal by the voice conversion circuit 159. Thereby, the car driver can know the road information from the loudspeaker 168 by his ears. Data from the CPU 153 can also be displayed even on the vehicle display unit 163 of the vehicle dashboard 164. Further, the data from the CPU 153 may also be indicated in the form of a lamp or symbol mark at the location of the vehicle dashboard 164 where the speedometer, etc. are mounted.

When the digital data is recorded in the recording device 155 for predetermined time, the driver can later know how the car ran on the road. Thus, in case of a traffic accident, the data can be later taken out as the driven record and the cause analysis of the accident can be carried out. Further, various types of digital data can be accumulated in the recording device 155 for predetermined time. For example, when the recording device 155 is arranged to record digital data relating to road information from the CPU 153 on a time axis basis, the driver can later know his car's past route. Furthermore, since the driver can know a car history such as an accident, it can contribute to accident analysis and future safety driving.

In addition, since the bar-shaped sign is read out with use of both of the front camera 126 and back camera 120, a reading accuracy can be increased.

Explanation will next be made as to how to detect a roll with reference to Figs. 8A and 8B. Since the cameras 120, 122, 124 and 126 always detect a road sign (bar-shaped sign) as an image during the car running, when ends of display of the road sign 4, 5, 9 or 10 are previously detected, a car roll to left or right during the car running operation can be sensed. Since the car is not running as if it were on a rail, the road sign end data 203 is varying to left or right as shown in Fig. 8A. When a car trouble or sleepy driving causes the car variation width to go out of the range of the preset allowable variation width 205 like road sign end data 204 in Fig. 8B, the system informs the car driver of it visually or audibly on the basis of the digital data received from the CPU 153. For this reason, the road sign sensing system can be used also as an auxiliary system for safe car operation.

Explanation will next be made as to how to detect a dirt on the cameras by referring to Figs. 9A and 9B. It is considered that mud splashed by a running car is deposited on the cameras (camera sensors) 120, 122, 124 and 126 which form an important input part of the system and especially on the front faces of the cameras, thus leading to reduction in the sensitivities of the cameras 120, 122, 124 and 126. In such a case, as means for always monitoring the sensitivities of the cameras 120, 122, 124 and 126, the level detection circuit 171 is used to monitor such a signal level as shown in Fig. 9A. When the signal level is reduced by a predetermined level or more when compared with the normal level 206 as shown in Fig. 9B, the alarm circuit 172 applies an alarm signal indicative of the abnormal level to the CPU 153 via the A/D circuit 173. In this way, the system can inform the driver of the camera dirt visually or audibly through the video conversion circuit 158 or A/D circuit 173, and therefore the camera sensors can be used always in their best conditions.

As has been explained in the foregoing, since the road sign sensing system in accordance with the fifth embodiment of the present invention is arranged to read the bar-shaped road sign with use of the camera sensors, convert it to digital data and inform the driver of information on the road sign visually or audibly, the driver can accurately get various types of information from such road sign information for his safe car operation.

As will be obvious from the foregoing explanation, in accordance with the present invention, since bar-shaped signs displayed for running vehicles to indicate information about road speed limit, presence or absence of a crossing or curve, under-construction section, road conditions, etc. are provided on road faces or side walls of expressway or ordinary roads, the road sign data digitally displayed can be read out by the sensors from the running vehicle, be informed to the driver on the video monitor or voice device provided within the vehicle, thus advantageously realizing comfortable and safe driving.

## Claims

1. A road sign display system including a digital signal sign (4, 5, 9, 10, 41) provided on a road surface or side wall (105) of an expressway (1, 6, 50, 98) or ordinary road for informing a vehicle driver of information about road speed limit, presence or absence of a pedestrian crossing or curve, under-construction section or road conditions.

2. A road sign display system as set forth in claim 1, wherein said digital signal sign is a bar-shaped sign of a plurality of bars (11 to 18, 19 to 26, 19' to 25', 30 to 33, 35 to 38) which indicates digital information based on different intervals between the bars.

3. A road sign display system as set forth in claim 1, wherein said digital signal sign is a bar-shaped sign of a plurality of bars which indicates digital information based on different widths of the bars.

4. A road sign display system as set forth in claim 1, wherein said digital signal sign is a bar-shaped sign of a plurality of bars (30 to 33, 35 to 38) extended in a direction parallel to a running direction of said vehicle, said bar-shaped sign indicating digital information based on different intervals between the bars.

5. A road sign display system as set forth in claim 1, wherein said digital signal sign is a bar-shaped sign of a plurality of bars extended in a direction parallel to a running direction of said vehicle, said bar-shaped sign indicating digital information based on different widths of the bars.

6. A road sign display system as set forth in claim 1, wherein said digital signal sign is a bar-shaped sign of a plurality of bars obtained by dividing lane dividing lines (54₁, 54₂) indicative of a running range of said vehicle, said bar-shaped sign indicating digital information based on different intervals (55 to 64, 65 to 74) between the bars.

7. A road sign display system as set forth in claim 1, wherein
said digital signal sign is a bar-shaped sign of a plurality of bars (75 to 83, 84 to 92) obtained by dividing lane dividing lines (93₁, 93₂) indicative of a running range of said vehicle, said bar-shaped sign indicates digital information based on different lengths of the bars, and
said lane dividing lines on both sides of said vehicle indicate the same digital information based on said bar-shaped sign.

8. A road sign display system as set forth in claim 1, wherein
said digital signal sign is a bar-shaped sign of a plurality of bars obtained by dividing lane dividing lines indicative of a running range of said vehicle, said bar-shaped sign indicates digital information based on different intervals between the bars, and
said lane dividing lines on both sides of said vehicle indicate different digital information based on said bar-shaped sign.

9. A road sign display system as set forth in claim 1, wherein said digital signal sign is a bar-shaped sign of a plurality of bars obtained by dividing lane dividing lines indicative of a running range of said vehicle, said bar-shaped sign indicating digital information based on different lengths of the bars.

10. A road sign display system as set forth in claim 1, wherein
said digital signal sign is a bar-shaped sign of a plurality of bars obtained by dividing lane dividing lines indicative of a running range of said vehicle, said bar-shaped sign indicates digital information based on different lengths of the bars, and
the lane dividing lines on both sides of said vehicle indicate the same digital information based on said bar-shaped sign.

11. A road sign display system as set forth in claim 1, wherein said digital signal sign is a bar-shaped sign of a plurality of bars obtained by dividing lane dividing lines indicative of a running range of said vehicle, said bar-shaped sign indicates digital information based on different lengths of the bars, and
the lane dividing lines on both sides of said vehicle indicate different digital information based on said bar-shaped sign.

12. A road sign display system as set forth in claim 1, wherein said digital signal sign is a bar-shaped sign of a plurality of bars provided in an oncoming-vehicle division structure strip or lane division structure strip on a road side, said bar-shaped sign indicating digital information based on different intervals between the bars.

13. A road sign display system as set forth in claim 1, wherein said digital signal sign is a bar-shaped sign of a plurality of bars provided in an oncoming-vehicle division structure strip or lane division structure strip on a road side, said bar-shaped sign indicating digital information based on different widths of the bars.

14. A road sign display system as set forth in claim 1, wherein said digital signal sign is a bar-shaped sign of a plurality of bars provided in an oncoming-vehicle division structure strip or lane division structure strip on a road side as extended in a direction parallel to a running direction of said vehicle, said bar-shaped sign indicating digital information based on different intervals between the bars.

15. A road sign display system as set forth in claim 1, wherein said digital signal sign is a bar-shaped sign of a plurality of bars provided in an oncoming-vehicle division structure strip or lane division structure strip on a road side as extended in a direction parallel to a running direction of said vehicle, said bar-shaped sign indicating digital information based on different widths of the bars.

16. A road sign display system as set forth in any of claims 2 to 8, wherein said bar-shaped sign has a length smaller than an interval between tires of said vehicle and is displayed in a middle of a vehicle running lane.

17. A road sign display system as set forth in claim 2 or 3, wherein said bar-shaped sign has such a thickness as to cause road noise and to transmit vibration to said vehicle to vibrate a driver of the vehicle and to sense the vibration bodily when tires of said vehicle tread on the sign.

18. A road sign display system as set forth in any of claims 2, 3 and 6 to 13, wherein said bar-shaped sign has such a size that a running vehicle running at a normal speed can read the bar-shaped sign without error.

19. A road sign display system as set forth in any of claims 2 to 11, wherein means for always feeding normal temperature water or the like onto said bar-shaped sign at the time of snowfall is provided.

20. A road sign display system as set forth in any of claims 2 to 11, wherein heater means for liquefying snow is provided under said bar-shaped sign.

21. A road sign display system as set forth in any of claims 2 to 15, wherein a display paint of said bar-shaped sign contains fluorescent material.

22. A road sign sensing system comprising:
a digital signal sign of a plurality of bars provided on a road surface as extended in a direction perpendicular to a moving direction of a vehicle for informing a driver of the vehicle of a road sign indicative of the digital signal sign; and
camera sensors (52, 53) provided on said vehicle (51) for scanning and reading said digital signal sign (200), scanning lines (201) of said sensors being set to be perpendicular to said plurality of bars.

23. A road sign sensing system comprising:
a digital signal sign of a plurality of bars provided on a road surface as extended in a direction parallel to a moving direction of a vehicle for informing a driver of the vehicle of a road sign indicative of the digital signal sign; and
camera sensors (52, 53) provided on said vehicle for scanning and reading said digital signal sign (200), scanning lines (201) of said sensors being set to be perpendicular to said plurality of bars.

24. A road sign sensing system comprising:
a digital signal sign of a plurality of bars provided on a road surface by dividing lane dividing lines indicative of a vehicle running range for informing a driver of the vehicle (51, 95) of a road sign indicative of the digital signal sign; and
camera sensors (52, 53, 96, 97) provided on said vehicle for scanning and reading said digital signal sign, scanning lines of said sensors being set to be parallel to said plurality of bars.

25. A road sign sensing system comprising:
a digital signal sign of a plurality of bars provided on a road surface by dividing lane dividing lines indicative of a vehicle running range for informing a driver of the vehicle of a road sign indicative of the digital signal sign; and
camera sensors provided on said vehicle for scanning and reading said digital signal sign, scanning lines of said sensors being set to be perpendicular to said digital signal sign and be parallel to said plurality of bars.

26. A road sign sensing system comprising:
a digital signal sign of a plurality of bars provided on a road surface by dividing lane dividing lines indicative of a vehicle running range for informing a driver of the vehicle of a road sign indicative of the digital signal sign; and
camera sensors provided on said vehicle for scanning and reading said digital signal sign, scanning lines of said sensors being set to be perpendicular to said digital signal sign and be perpendicular to a vehicle running direction.

27. A road sign display system comprising
a digital signal sign for informing a vehicle driver of a road sign, wherein
said digital signal sign is provided with a start bit and an end bit.

28. A road sign sensing apparatus comprising:
means (120, 122, 124, 126) provided on a vehicle for reading a digital signal sign to inform a driver of said vehicle of a road sign indicative of said digital signal sign; and
a video display device (167) provided in said vehicle for displaying contents of said digital signal sign in the form of character information (166).

29. A road sign sensing apparatus comprising:
means (120, 122, 124, 126) provided on a vehicle for reading a digital signal sign to inform a driver of said vehicle of a road sign indicative of said digital signal sign; and
a loudspeaker (168) provided in said vehicle for informing said driver of contents of said digital signal sign in the form of a voice or signal sound.

30. A road sign sensing apparatus comprising:
means (120, 122, 124, 126) provided on a vehicle for reading a digital signal sign to inform a driver of a vehicle of a road sign indicative of said digital signal sign; and
means (171, 172) provided in said vehicle for judging whether or not a changed level in an output signal of said sign reading means exceeds a predetermined threshold value,
wherein said judgement means (172) outputs an alarm signal when the changed level in the output signal of said sign reading means exceeds said predetermined threshold value.

31. A road sign sensing apparatus comprising:
means (120, 122, 124, 126) provided on a vehicle for reading a digital signal sign to inform a driver of a vehicle of a road sign indicative of said digital signal sign;
means (171, 172) provided in said vehicle for judging whether or not a level in an output signal of said sign reading means is dropped by a predetermined level or more from an initial level; and
alarm means (172) provided in said vehicle for outputting an alarm to a driver of said vehicle to clean said sign reading means in the form of an image or voice when said judgement means judges that the level in the output signal of said sign reading means is dropped by the predetermined level or more from the initial level.

32. A road sign display apparatus comprising:
a digital signal sign drawn on a surface of a road for informing a driver of a vehicle of a road sign indicative of the digital signal sign; and
a device buried in said road for illuminating said digital signal sign.

33. A road sign sensing apparatus comprising:
means (120, 122, 124, 126) provided on a vehicle for reading a digital signal sign to inform a driver of said vehicle of a road sign indicative of said digital signal sign;
means (155) provided in said vehicle for storing various types of data indicative of said digital signal sign read out by said sign reading means; and
means for finding a route, along which said vehicle ran, from said data stored in said storage means.
